# EUROPEAN PATENT APPLICATION

(11) **EP 2 146 316 A1**
(43) Date of publication of application: **20.01.2010**
(21) Application number: 08753023.4
(22) Date of filing: 14.05.2008
(51) Int. Cl.: G06T 7/00

(54) **REGISTERING DEVICE, CHECKING DEVICE, PROGRAM, AND DATA STRUCTURE**

(30) Priority: 15.05.2007 JP 2007129525
(71) Applicant: Sony Corporation, Tokyo 108-0075 (JP)
(72) Inventor: MOHAMMAD, Abdul Muquit, Tokyo 108-0075 (JP); ABE, Hiroshi, Tokyo 108-0075 (JP)
(74) Representative: Robinson, Nigel Alexander Julian
(86) International application number: PCT/JP2008/059295
(87) International publication number: WO 2008/143268

(57) **Abstract**

There is proposed a registration apparatus, a verification apparatus, and a program capable of improving authentication accuracy and an identification data structure capable of improving reliability. A blood vessel line included in an image is divided into a plurality of partial lines on the basis of end points and a diverging point of the blood vessel line. A parameter representing the shape of each of the partial lines is extracted on the basis of end points at both ends of the partial line. Data including points at both ends of each of the partial lines and the parameter is generated as data to be registered or data to be compared with registered data.

## Description

### Technical Field

The present invention relates to a registration apparatus, a verification apparatus, a program, and a data structure, and is preferably applied to biometrics authentication.

### Background Art

In resent years, blood vessels have been employed as one of the subjects of biometric authentication. As a related art of such biometric authentication, an authentication apparatus has been proposed for extracting end points and a diverging point of a blood vessel on a captured image as feature points and generating data to be registered or data to be compared with registered data from the extracted feature points (see, for example, Patent Document 1). As compared with an authentication apparatus for setting image data itself as data to be registered, this authentication apparatus can markedly reduce memory occupancy of data to be stored.
Patent Document 1: Japanese Unexamined Patent
Application Publication No. 2003-303178

However, since the end points and the diverging point are separate from one another on a blood vessel, they are unreliable data for making a determination whether a person is a registrant. Accordingly, even if feature points generated as data to be compared with registered data are the same as feature points generated as the registered data, the probability of determining that a person who is not a registrant is the registrant or a person who is the registrant is not the registrant by mistake due to external factors such as an image capturing environment and noise or internal factors such as (the difference between individuals in) the difficulty in capturing the image of blood vessels of living organisms is high. That is, the accuracy of authentication (the accuracy of determination whether a person is a registrant) is low.

### Disclosure of Invention

The present invention has been made in view of the above-described background, and proposes a registration apparatus, a verification apparatus, and a program capable of improving authentication accuracy and an identification data structure capable of improving reliability.

The present invention provides a registration apparatus including: dividing means for dividing a blood vessel line included in an image into a plurality of partial lines on the basis of end points and a diverging point of the blood vessel line; extracting means for extracting a parameter representing a shape of each of the plurality of partial lines on the basis of points at both ends of the partial line; and generating means for generating data including the points at both ends of each of the plurality of partial lines and the parameter.

Furthermore, the present invention provides a verification apparatus including: storing means for storing data including points at both ends of each of a plurality of partial lines into which a blood vessel line included in an image is divided on the basis of end points and a diverging point of the blood vessel line and including a parameter representing a shape of each of the plurality of partial lines on the basis of the points at both ends of the partial line; restoring means for restoring the blood vessel line using the points at both ends of each of the partial lines and the parameter; and verifying means for comparing the blood vessel line restored by the restoring means with a blood vessel line set as a subject to be compared with the blood vessel line.

Still furthermore, the present invention provides a program causing: dividing means to divide a blood vessel line included in an image into a plurality of partial lines on the basis of end points and a diverging point of the blood vessel line; extracting means to extract a parameter representing a shape of each of the plurality of partial lines on the basis of points at both ends of the partial line; and generating means to generate data including the points at both ends of each of the plurality of partial lines and the parameter.

Still furthermore, the present invention provides a data structure of identification data generated as data to be registered. The identification data has a structure including points at both ends of each of a plurality of partial lines into which a blood vessel line included in an image is divided on the basis of end points and a diverging point of the blood vessel line and including a parameter representing a shape of each of the plurality of partial lines on the basis of the points at both ends of the partial line. The points at both ends of each of the plurality of partial lines and the parameter are used for processing for determining whether a person is a registrant on the basis of a degree of similarity.

As described previously, according to the present invention, by generating data including points at both ends of each of a plurality of partial lines into which a blood vessel line included in an image is divided on the basis of end points and a diverging point of the blood vessel line and including a parameter representing the shape of each of these partial lines on the basis of the points at both ends of the partial line, it is possible to specify not only the connection relation ship between these partial lines but also the shape of each of the partial lines. Accordingly, it is possible to reduce the probability of determining that a person who is not a registrant is the registrant or a person who is the registrant is not the registrant by mistake regardless of the presence or absence of external factors such as an image capturing environment and noise or internal factors such as (the difference between individuals in) the difficulty in capturing the image of blood vessels of living organisms. Consequently, a registration apparatus, a verification apparatus, and a program capable of improving authentication accuracy and identification data structure capable of improving reliability can be obtained.

### Brief Description of Drawings

[Fig. 1] Fig. 1 is a block diagram illustrating an entire configuration of an authentication apparatus according to an embodiment of the present invention.
[Fig. 2] Figs. 2 are schematic diagrams illustrating an image obtained before pattern conversion and an image obtained after pattern conversion.
[Fig. 3] Fig. 3 is a schematic diagram illustrating an image from which end points and diverging points are detected.
[Fig. 4] Fig. 4 is a block diagram illustrating a functional configuration of a control section for performing a control point extraction process.
[Fig. 5] Fig. 5 is a schematic diagram illustrating an example of a blood vessel line that is divided on the basis of end points and diverging points.
[Fig. 6] Figs. 6 are schematic diagrams illustrating a relationship between the number of intersection points of a partial blood vessel line and an end-to-end connection line and the type of the partial blood vessel line.
[Fig. 7] Figs. 7 are schematic diagrams illustrating exemplary redivided partial blood vessel lines.
[Fig. 8] Fig. 8 is a flowchart illustrating a control point extraction process.
[Fig. 9] Figs. 9 are schematic diagrams describing searching for a control point sequence for a convex partial blood vessel line or an S-shaped partial blood vessel line.
[Fig. 10] Fig. 10 is a schematic diagram illustrating an example of a data structure of identification data.
[Fig. 11] Figs. 11 are schematic diagrams illustrating first examples of comparison between an original curve and a restored curve.
[Fig. 12] Figs. 12 are schematic diagrams illustrating second examples of comparison between an original curve and a restored curve.
[Fig. 13] Fig. 13 is a flowchart illustrating an authentication process.

### Best Modes for Carrying Out the Invention

An embodiment of the present invention will be described in detail below with reference to the accompanying drawings.

### (1) Entire Configuration of Authentication Apparatus

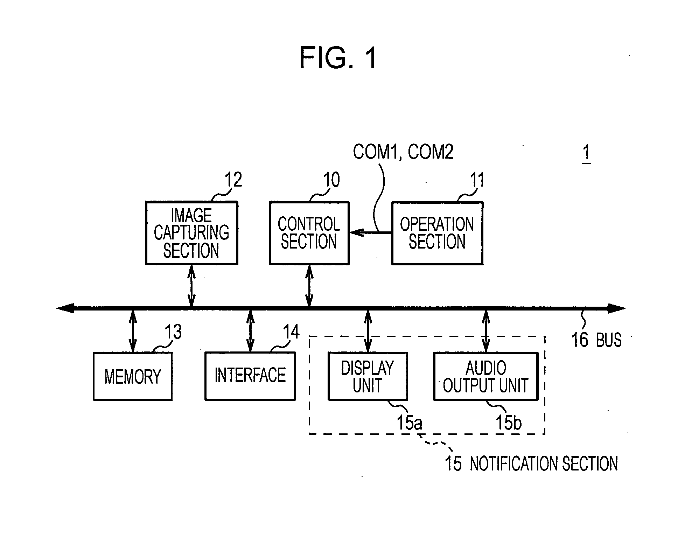

Fig. 1 illustrates the entire configuration of an authentication apparatus 1 according to an embodiment of the present invention. The authentication apparatus 1 is configured by connecting an operation section 11, an image capturing section 12, a memory 13, an interface 14, and a notification section 15 to a control section 10 via a bus 16.

The control section 10 is a computer that includes a Central Processing Unit (CPU) for performing overall control of the authentication apparatus 1, a Read-Only Memory (ROM) for storing various programs and setup information, a Random Access Memory (RAM) functioning as a work memory for the CPU, and an image processing unit.

An execution command COM1 for executing a mode (hereinafter referred to as a blood vessel registration mode) of registering blood vessels of a user to be registered (hereinafter referred to as a registrant) or an execution command COM 2 for executing a mode (hereinafter referred to as an authentication mode) of determining whether the registrant is present is input from the operation section 11 into the control section 10 in accordance with a user operation.

The control section 10 determines a mode to be executed on the basis of the execution command COM1 or the execution command COM2, and executes the blood vessel registration mode or the authentication mode by appropriately controlling the image capturing section 12, the memory 13, the interface 14, and the notification section 15 in accordance with a program corresponding to a result of the mode determination.

The image capturing section 12 has a camera that sets space over a finger placement area on the housing of the authentication apparatus 1 as image capturing space, and adjusts the lens position of an optical system of the camera, the diaphragm value of a diaphragm of the camera, and the shutter speed (exposure time) of an image pickup element of the camera in accordance with a setting value set by the control section 10.

Furthermore, the image capturing section 12 has a near infrared light source for emitting near infrared light to the image capturing space. The image capturing section 12 turns on the near infrared light source for a time period specified by the control section 10, periodically captures an image of a subject which is reflected on an image capturing surface of the image pickup element, and sequentially outputs pieces of image data of images generated from the image capturing to the control section 10.

The memory 13 is, for example, a flash memory. The memory 13 stores data in an area specified by the control section 10 or reads out data stored in the area.

The interface 14 transmits and receives various pieces of data to and from an external apparatus connected thereto via a predetermined transmission path.

The notification section 15 includes a display unit 15a and an audio output unit 15b. The display unit 15a displays characters and figures on a display screen on the basis of display data transmitted from the control section 10. On the other hand, the audio output unit 15b outputs sound from a speaker on the basis of audio data transmitted from the control section 10.

### (1-1) Blood Vessel Registration Mode

Next, the blood vessel registration mode will be described. If the blood vessel registration mode is determined as a mode to be executed, the control section 10 sets the operation mode to the blood vessel registration mode and causes the notification section 15 to make a notification that a finger has to be placed in the image capturing space.

At that time, the control section 10 causes the camera included in the image capturing section 12 to perform an image capturing operation, and turns on the near infrared light source included in the image capturing section 12.

In this state, if a finger is placed in the image capturing space, near infrared light outputs from the near infrared light source, passes through the inside of the finger, and enters the image pickup element through the optical system and diaphragm of the camera as light that projects a blood vessel. As a result, an image of the blood vessel in the finger is projected on the image capturing surface of the image pickup element. Accordingly, the image of the blood vessel is included in an image based on image data generated as a result of the image capturing performed by the image capturing section 12.

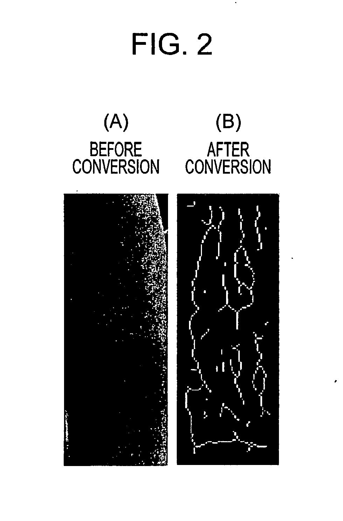

The control section 10 performs pieces of preprocessing such as image rotation compensation, noise removal, and image clipping upon image data transmitted from the image capturing section 12 as appropriate, and generates a binary image (Fig. 2(B)) in which blood vessels are expressed as a pattern from a multilevel image (Fig. 2(A)) obtained after the preprocessing as illustrated in, for example, Fig. 2.

To take an example of a concrete method of generating the binary image, the control section 10 highlights the outlines of blood vessels included in a target image obtained after the preprocessing using a Gaussian filter and a differential filter such as a Log filter and converts the target image with the highlighted outlines into a binary image on the basis of a set brightness value. Subsequently, the control section 10 extracts from the binary image centers of the widths of the blood vessels or brightness peaks of the widths of the blood vessels so as to obtain a pattern of lines with the same width representing the blood vessels. In this embodiment, the blood vessels are represented as a pattern of lines with the same width of one pixel. Such blood vessels having the same line width are hereinafter referred to as blood vessel lines.

Furthermore, if the control section 10 generates a binary image, it extracts points representing the shape of blood vessel lines included in the binary image (hereinafter referred to as feature points), generates data to be identified (hereinafter referred to as identification data) including the feature points, and registers the identification data by storing the identification data in the memory 13.

Thus, the control section 10 can execute the blood vessel registration mode.

### (1-2) Authentication Mode

Next, the authentication mode will be described. If the authentication mode is determined as a mode to be executed, the control section 10 sets the operation mode to the authentication mode, causes the notification section 15 to make a notification that a finger has to be placed in the image capturing space, causes the camera included in the image capturing section 12 to perform an image capturing operation, and turns on the near infrared light source. Subsequently, the control section 10 performs pieces of preprocessing such as image rotation compensation, noise removal, and image clipping upon image data transmitted from the image capturing section 12 as appropriate.

Furthermore, the control section 10 generates a binary image from an image obtained as a result of the preprocessing like in the blood vessel registration mode, and restores blood vessel lines from the feature points that are stored in the memory 13 as the identification data.

Subsequently, the control section 10 compares blood vessel lines included in the generated binary image with the restored blood vessel lines (performs pattern matching). As a result of the comparison, a similarity level (the degree of correlation) among these blood vessel lines is obtained. The control section 10 determines whether a person can be approved as a registrant in accordance with the similarity level.

If it is determined that the person cannot be approved as the registrant, the control section 10 visually and aurally notifies the person of the fact through the display unit 15a and the audio output unit 15b. On the other hand, if it is determined that the person can be approved as the registrant, the control section 10 transmits data indicating that the person has been approved as the registrant to an apparatus connected to the interface 14. In response to the data indicating that the person has been approved as the registrant, the apparatus connected to the interface 14 performs predetermined processing that should be performed when the authentication is successfully performed, for example, locking a door for a predetermined time period or releasing a restricted operation mode.

Thus, the control section 10 can execute the authentication mode.

### (2) Details of Feature Point Extraction Process Performed by Control Section

Next, the feature point extraction process performed by the control section 10 will be described in detail.

### (2-1) Detection of End Point and Diverging Point

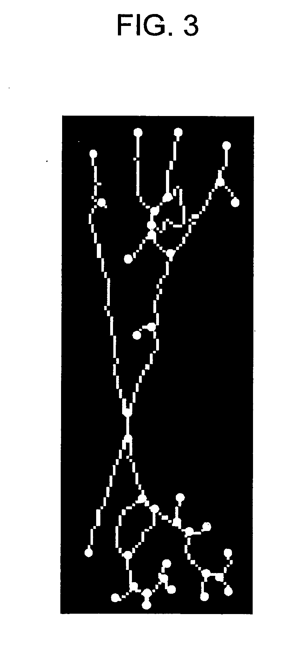

If the control section 10 generates a binary image, it detects end points and diverging points from points (pixels) of a blood vessel line included in the binary image as illustrated in, for example, Fig. 3.

### (2-2) Extraction of Control Point

Subsequently, the control section 10 divides the blood vessel line into partial lines (hereinafter referred to as partial blood vessel lines) on the basis of the end points and the diverging points, and extracts intermediate control points forming a point sequence (hereinafter referred to as a control point sequence) used to generate a curve using a predetermined function from each of the partial blood vessel lines.

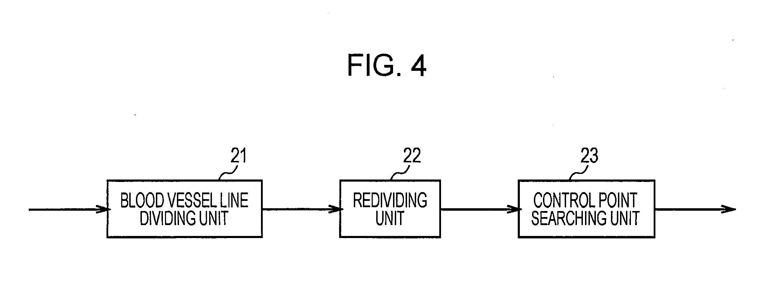

An exemplary method of extracting a control point will be described. As illustrated in Fig. 4, the control section 10 functions as a blood vessel line dividing unit 21, a redividing unit 22, and a control point searching unit 23 in performing this extraction method. The details of processing operations performed by the blood vessel line dividing unit 21, the redividing unit 22, and the control point searching unit 23 will be described below.

### (2-2-1) Division of Blood Vessel Line

The blood vessel line dividing unit 21 divides a blood vessel line into partial blood vessel lines each of which extends from an end point or a diverging point to the next end point or the next diverging point.

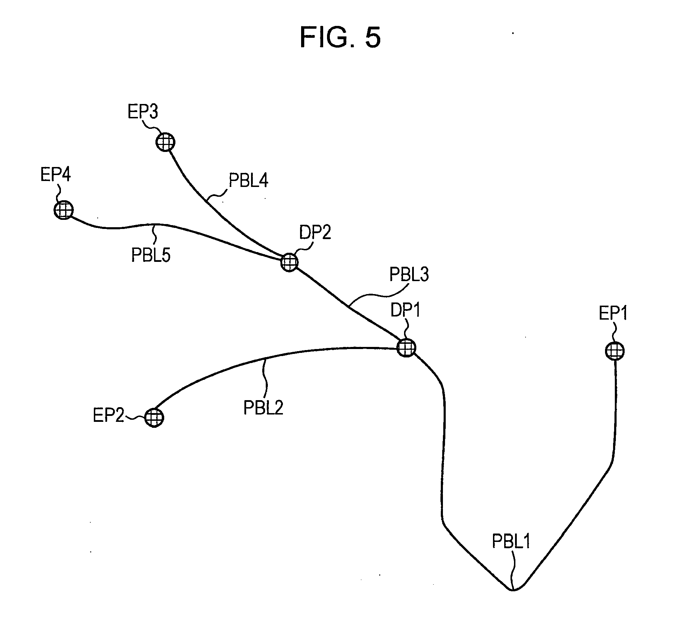

For example, in a case illustrated in Fig. 5, the blood vessel line dividing unit 21 divides a blood vessel line into a partial blood vessel line PBL1 extending from a diverging point DP1 set as a starting point to another feature point (an end point EP1) that appears after the diverging point DP1 and is set as a terminal point, a partial blood vessel line PBL2 extending from the diverging point DP1 set as the starting point to another feature point (an end point EP2) that appears after the diverging point DP1 and is set as a terminal point, and a partial blood vessel line PBL3 extending from the diverging point DP1 set as the starting point to another feature point (a diverging point DP2) that appears after the diverging point DP1 and is set as a terminal point. The blood vessel line dividing unit 21 similarly divides the blood vessel line into a partial blood vessel line PBL4 extending from the diverging point DP2 set as a starting point to another feature point (an end point EP3) that appears after the diverging point DP2 and is set as a terminal point and a partial blood vessel line PBL5 extending from the diverging point DP2 set as the starting point to another feature point (an end point EP4) that appears after the diverging point DP2 and is set as a terminal point.

In the case illustrated in Fig. 5, although only the diverging points DP1 and DP2 are set as the starting points, an end point and a diverging point may be set as the starting points. As is apparent from Fig. 5, an end point can only be either a starting point or a terminal point, while a diverging point can be either or both of a starting point and a terminal point.

### (2-2-2) Redivision of Partial Blood Vessel Line

Next, the redividing unit 22 detects the number of intersection points of each of the partial blood vessel lines and a straight line (hereinafter referred to as an end-to-end connection line) connecting the starting point and the terminal point of the partial blood vessel, and redivides the partial blood vessel line on the basis of a result of the detection.

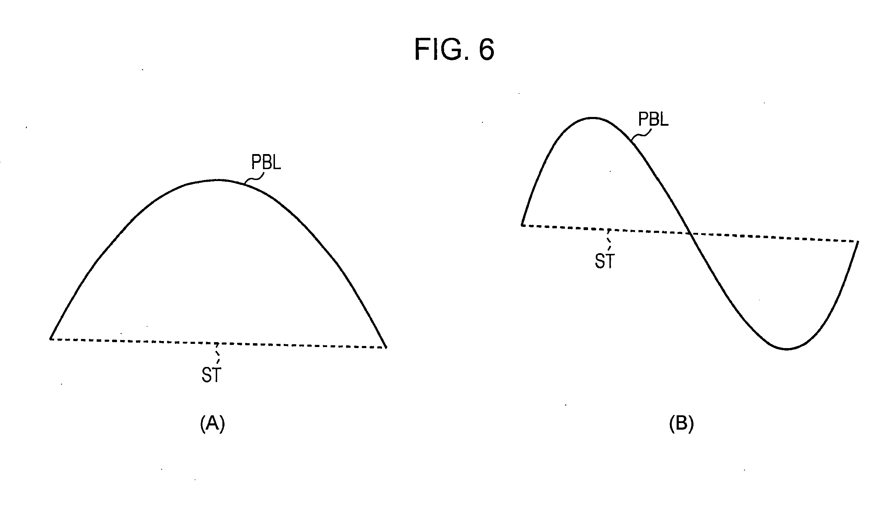

As illustrated in, for example, Fig. 6(A), if there is no intersection point of a partial blood vessel line PBL and an end-to-end connection line ST, the redividing unit 22 recognizes that the partial blood vessel line PBL is convex and determines no to redivide the partial blood vessel line PBL.

On the other hand, as illustrated in, for example, 6(B), if there is a single intersection point of the partial blood vessel line PBL and the end-to-end connection line ST, the redividing unit 22 recognizes that the partial blood vessel line PBL is S-shaped and also determines not to redivide the partial blood vessel line PBL.

On the other hand, if there are two or more intersection points of the partial blood vessel line PBL and the end-to-end connection line ST, the redividing unit 22 recognizes that the partial blood vessel line PBL is not convex and S-shaped, determines to redivide the partial blood vessel line PBL, and redivides the partial blood vessel line PBL in units of areas surrounded by the partial blood vessel line PBL and the end-to-end connection line ST.

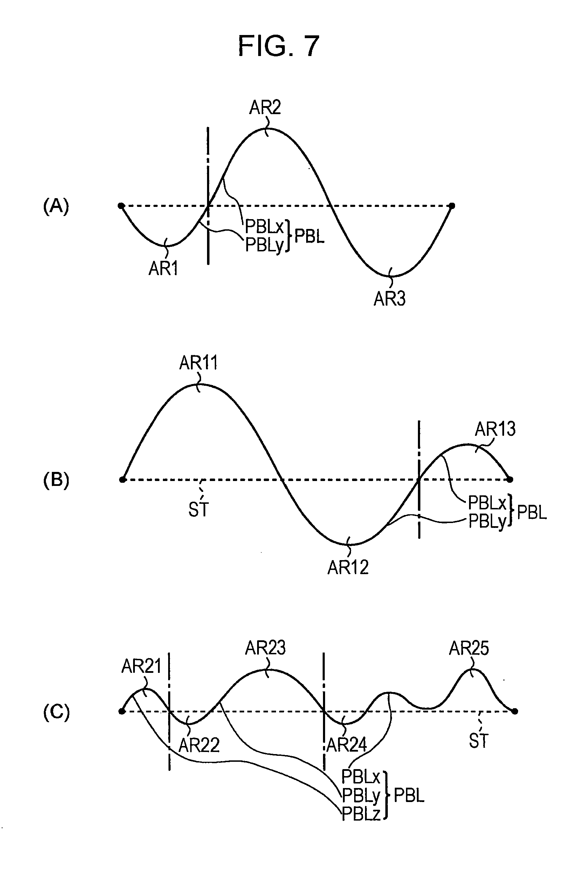

That is, for example, in a case illustrated in Fig. 7(A), the redividing unit 22 creates combinations of two adjacent areas AR surrounded by the partial blood vessel line PBL and the end-to-end connection line ST, the combination of areas AR1 and AR2 and the combination of the area AR2 and an area AR3, determines which of these combinations is larger in size, and redivides the partial blood vessel line PBL into an S-shaped partial blood vessel line PBLx along the combination of the areas AR2 and AR3 which is larger in size and a convex partial blood vessel line PBLy along the area AR1.

Furthermore, for example, in a case illustrated in Fig. 7(B), the redividing unit 22 creates combinations of two adjacent areas AR surrounded by the partial blood vessel line PBL and the end-to-end connection line ST, the combination of areas AR11 and AR12 and the combination of the area AR12 and an area AR13, determines which of these combinations is larger in size, and redivides the partial blood vessel line PBL into the S-shaped partial blood vessel line PBLx along the combination of the areas AR11 and AR12 which is larger in size and the convex partial blood vessel line PBLy along the area AR13.

Still furthermore, for example, in a case illustrated in Fig. 7(C), the redividing unit 22 creates combinations of two adjacent areas AR surrounded by the partial blood vessel line PBL and the end-to-end connection line ST, the combination of areas AR21 and AR22, the combination of the area AR22 and an area AR23, the combination of the area AR23 and an area AR24, and the combination of the area AR24 and an area AR 25, determines which of these combinations is the largest in size and is the second largest in size, and redivides the partial blood vessel line PBL into the S-shaped partial blood vessel line PBLx along the combination of the areas AR24 and AR25 which is the largest in size, the S-shaped partial blood vessel line PBLy along the combination of the areas AR22 and AR23 which is the second largest in size, and a convex partial blood vessel line PBLz along the area AR21.

Thus, the redividing unit 22 redivides a partial blood vessel line into a plurality of partial blood vessel lines so that a partial blood vessel line having one intersection point with the end-to-end connection line ST is preferentially obtained and the number of intersection points of each of these redivided partial blood vessel lines and the end-to-end connection line ST becomes 1 or 0. As a result, simple redivided partial blood vessel lines can be obtained. Moreover, as compared in a case where a partial blood vessel line is divided into a plurality of partial blood vessel lines having no intersection point with the end-to-end connection line ST, it is possible to reduce the number of redivided partial blood vessel lines and further reduce the number of control point sequences.

Furthermore, the redividing unit 22 redivides a partial blood vessel line into a plurality of partial blood vessel lines in units of areas surrounded by the partial blood vessel line and an end-to-end connection line in descending order of total size of two adjacent areas. As a result, even if the partial blood vessel line is a complicated curve, it is possible to obtain simple partial blood vessel lines as more characteristic curve portions of the complicated curve after redividing the partial blood vessel line and to extract a control point sequence having a high degree of reproducibility from each of the redivided partial blood vessel lines.

### (2-2-3) Control Point Search

Next, the control point searching unit 23 sets one of points at both ends of a partial blood vessel line as a starting control point forming a control point sequence, sets the other one of the points as a terminal control point forming the control point sequence, and searches for intermediate control points forming the control point sequence using the starting control point and the terminal control point. In this embodiment, a control point sequence used to generate a curve using a Bézier function is composed of four control points, and searching for two intermediate control points forming the control point sequence is performed.

More specifically, the control point searching unit 23 sets areas (hereinafter referred to as search areas) in which searching for intermediate control points is performed above the peak portion of the partial blood vessel line. In this embodiment, the control point searching unit 23 changes a search area setting method in accordance with the type of the partial blood vessel line.

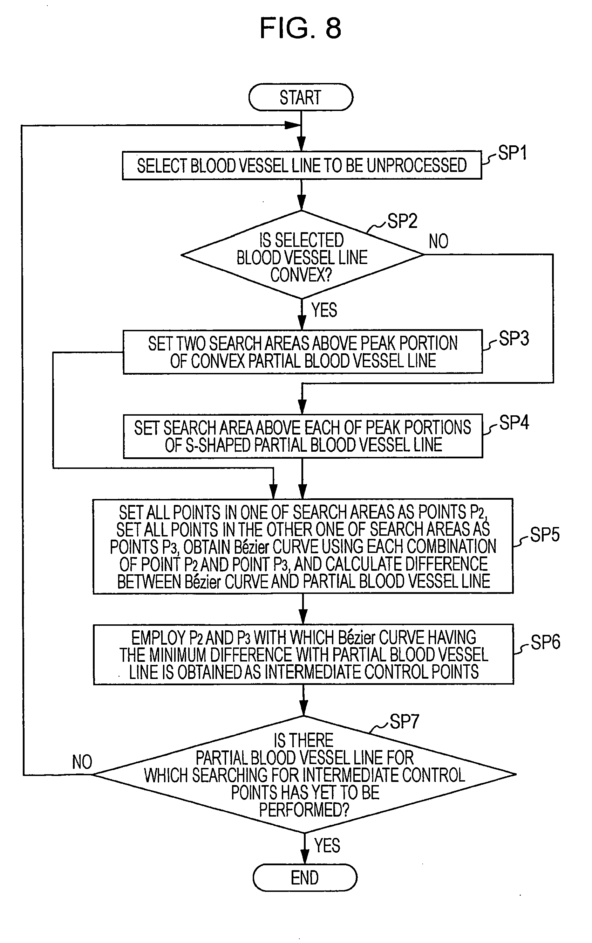

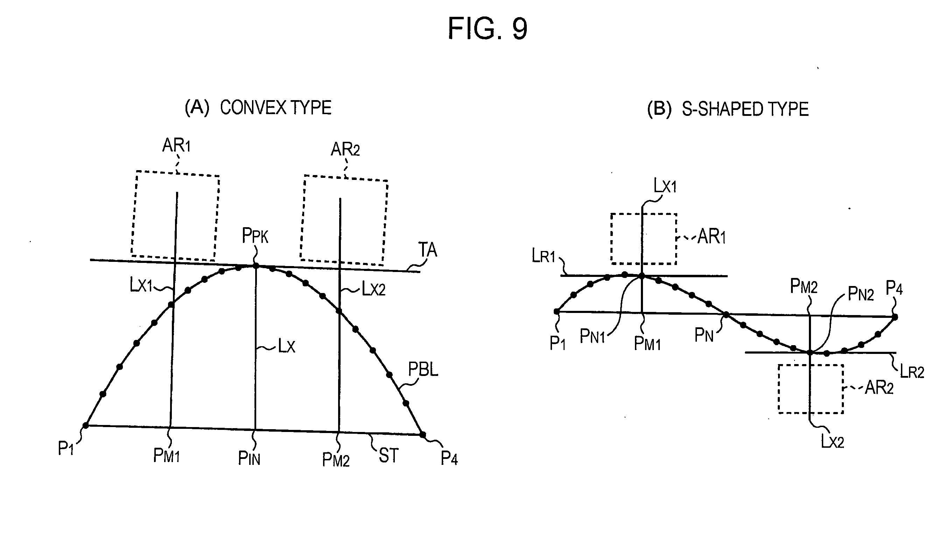

That is, the control point searching unit 23 selects a partial blood vessel line to be processed (step SP1 in Fig. 8), and determines whether the selected partial blood vessel line is convex (step SP2 in Fig. 8). If the selected partial blood vessel line is convex, the control point searching unit 23 detects from points forming the partial blood vessel line PBL a peak point P_{PK} from which the longest line L_{X} perpendicular to the end-to-end connection line ST is obtained and an intersection point PIN of the perpendicular line L_{X} and the end-to-end connection line ST as illustrated in Fig. 9(A).

The control point searching unit 23 sets search areas AR₁ and AR₂ of predetermined size on the opposite side of the end-to-end connection line ST across a line TA that passes through the peak point P_{PK} and is parallel to the end-to-end connection line ST so that the search area AR₁ has a line L_{X1} which passes through an intermediate point P_{M1} between the intersection point P_{IN} and an end point P₁ of the partial blood vessel line PBL and is perpendicular to the end-to-end connection line ST as a line of symmetry and the search area AR₂ has a line L_{X2} which passes through an intermediate point P_{M2} between the intersection point PIN and an end point P₄ of the partial blood vessel line PBL and is perpendicular to the end-to-end connection line ST as a line of symmetry(step SP3 in Fig. 8).

On the other hand, if the control point searching unit 23 searches for intermediate control points for an S-shaped partial blood vessel line, the control point searching unit 23 detects from points forming the partial blood vessel line PBL an intersection point P_{N} of the partial blood vessel line PBL and the end-to-end connection line ST, an intersection point P_{N1} of the partial blood vessel line PBL and the line L_{X1} that passes through an intermediate point P_{M1} between the intersection point P_{N} and the end point P₁ of the partial blood vessel line PBL and is perpendicular to the end-to-end connection line ST, and an intersection point P_{N2} of the partial blood vessel line PBL and the line L_{X2} that passes through an intermediate point P_{M2} between the intersection point P_{N} and the end point P₄ of the partial blood vessel line PBL and is perpendicular to the end-to-end connection line ST as illustrated in Fig. 9(B).

The control point searching unit 23 sets the search area AR₁ of predetermined size on the opposite side of the end-to-end connection line ST across a line L_{R1} that passes through the intersection point P_{N1} and is parallel to the end-to-end connection line ST so that the search area AR₁ has the line L_{X1} which passes through the intermediate point P_{M1} and is perpendicular to the end-to-end connection line ST as a line of symmetry, and sets the search area AR₂ of predetermined size on the opposite side of the end-to-end connection line ST across a line L_{R2} that passes through the intersection point P_{N2} and is parallel to the end-to-end connection line ST so that the search area AR₂ has the perpendicular line L_{X2} which passes through the intermediate point P_{M2} and is perpendicular to the end-to-end connection line ST as a line of symmetry (step SP4 in Fig. 8).

Thus, the control point searching unit 23 changes a search area setting method in accordance with the type of a partial blood vessel line. Accordingly, it is possible to appropriately set the search areas AR₁ and AR₂ above the peak portion of the partial blood vessel line PBL using the end-to-end connection line ST irrespective of the shape of the partial blood vessel line PBL.

On the other hand, the control point searching unit 23 starts to search for intermediate control points after setting the search areas AR₁ and AR₂. That is, the control point searching unit 23 fixes one of points at both ends of the partial blood vessel line PBL as the starting control point P₁, fixes the other one of the points as the terminal control point P₄, and obtains a Bézier curve using the control points P₁ and P₄ and a combination of one of points in the search area AR₁ and one of points in the search area AR₂ (step SP5 in Fig. 8).

The control point searching unit 23 extracts a combination of one of points in the search area AR₁ and one of points in the search area AR₂ with which a Bézier curve having the maximum number of overlapping pixels with the partial blood vessel line PBL is obtained as intermediate control points forming a control point sequence (step SP6 in Fig. 8).

Accordingly, the control point searching unit 23 can extract intermediate control points with which a curve that is the same as or similar to the actual partial blood vessel line PBL can be generated with certainty.

Thus, the control point searching unit 23 repeatedly performs the above-described control point search (a loop from step SP1 to step SP7) until it extracts intermediate control points forming a control point sequence from each partial blood vessel line (YES in step SP7).

### (2-3) Generation of Identification Data

After completing the above-described extraction process, the control section 10 functions as an identification data generation unit for generating identification data that includes a control point sequence for each partial blood vessel line (that is, points at both ends of each partial blood vessel line (a starting control point and a terminal control point) and intermediate control points for each partial blood vessel line) and an identifier indicating that the control point sequence has been obtained through the above-described extraction process (hereinafter referred to as a content certification identifier), and registers the generated identification data in the memory 13 (Fig. 1).

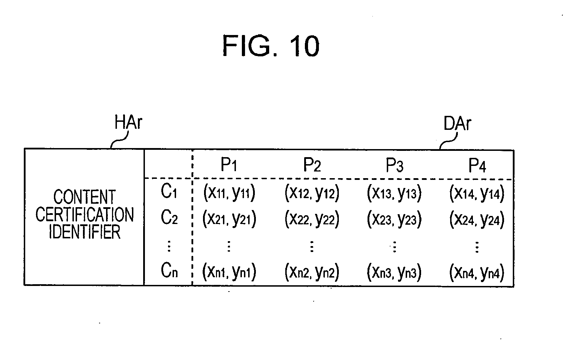

Fig. 10 illustrates an exemplary data structure of the identification data. The identification data includes a header region HAr and a data region DAr. The header region HAr stores the content certification identifier, for example, a version related to the extraction process.

On the other hand, in the data region DAr, the positions (x coordinates and y coordinates) of a control point P₁ that is a starting control point, a control point P₂ that is a first intermediate control point, a control point P₃ that is a second intermediate control point, and a control point P₄ that is a terminal control point which are used to generate a fourth-order Bézier curve are stored for each of partial blood vessel lines Ci (i denoting the number of partial blood vessel lines = 2, 3, 4, ....., and n (n is an integer)) in the form of, for example, a matrix.

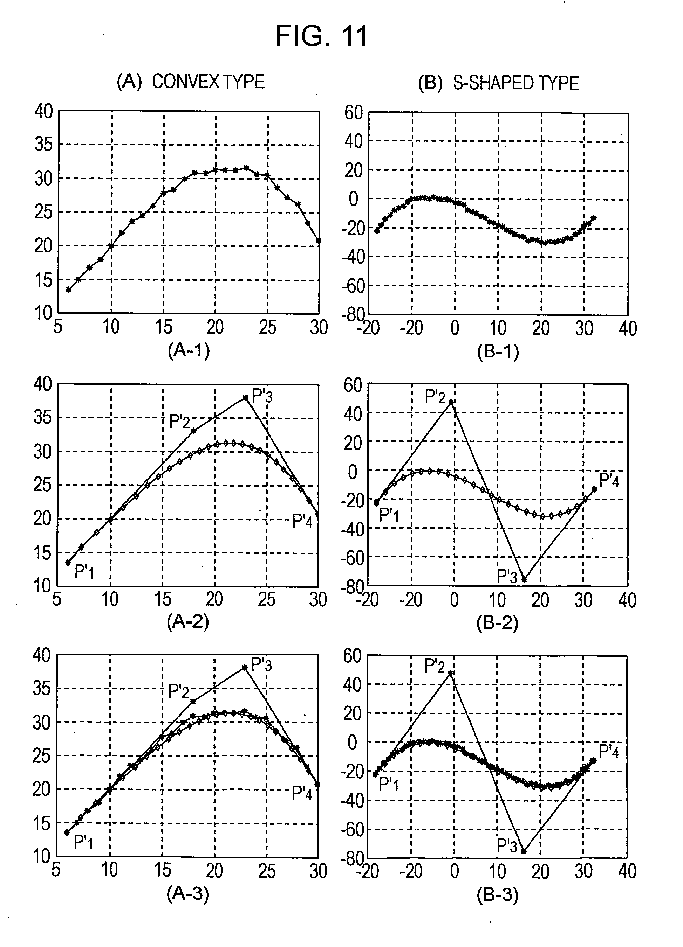

Fig. 11 illustrates a result of an experiment for comparing an original curve with a curve restored using a control point sequence extracted from the original curve through the above-described extraction process. Fig. 11(A) illustrates a result of an experiment using a convex curve, and Fig. 11(B) illustrates a result of an experiment using an S-shaped curve.

Figs. 11(A-1) and 11(B-1) illustrate arbitrarily given curves. On the other hand, Fig. 11(A-2) illustrates a sequence of control points P₁' to P₄' some of which are extracted from the curve illustrated in Fig. 11(A-1) using the above-described control point sequence extraction method and a curve restored using the sequence of the control points P₁' to P₄', and Fig. 11(B-2) illustrates a sequence of the control points P₁' to P₄' some of which are extracted from the curve illustrated in Fig. 11(B-1) using the above-described control point sequence extraction method and a curve restored using the sequence of the control points P₁' to P₄'. On the other hand, Fig. 11 (A-3) illustrates the arbitrarily given curve illustrated in Fig. 11(A-1) and the curve restored using the sequence of the control points P₁' to P₄' illustrated in Fig. 11(A-2), and Fig. 11(B-3) illustrates the arbitrarily given curve illustrated in Fig. 11(B-1) and the curve restored using the sequence of the control points P₁' to P₄' illustrated in Fig. 11(B-2).

As is apparent from Fig. 11, if this extraction method is used in which one of points at both ends of an original curve is set as the starting control point P₁' and the other one of the points is set as the terminal control point P₄', it is possible to extract the intermediate control points P₂' and P₃' with which a curve that is substantially the same as the original curve can be restored.

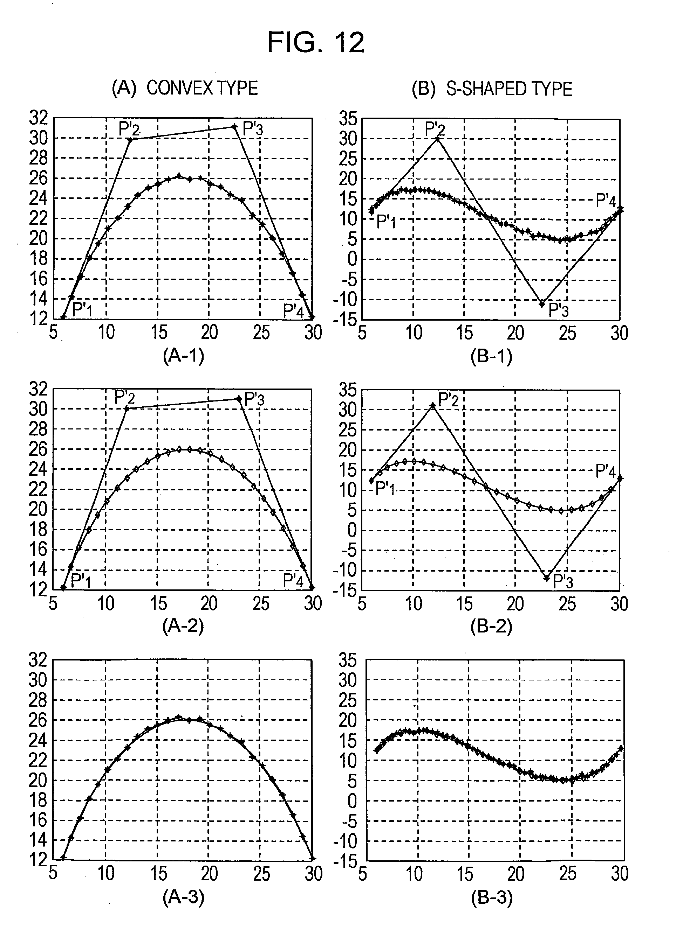

Fig. 12 illustrates a result of another comparison experiment. Like in Fig. 11, Fig. 12(A) illustrates a result of an experiment using a convex curve, and Fig. 12(B) illustrates a result of an experiment using an S-shaped curve.

Figs. 12(A-1) and 12(B-1) illustrate a given sequence of control points P₁ to P₄ and a curve obtained by applying random noise to a Bézier curve generated using the sequence of the control points P₁ to P₄. On the other hand, Fig. 12(A-2) illustrates a sequence of control points P₁' to P₄' some of which are extracted from the curve illustrated in Fig. 12(A-1) using the above-described control point sequence extraction method and a curve restored using the sequence of the control points P₁' to P₄', and Fig. 12(B-2) illustrates a sequence of the control points P₁' to P₄' some of which are extracted from the curve illustrated in Fig. 12(B-1) using the above-described control point sequence extraction method and a curve restored using the sequence of the control points P₁' to P₄'. On the other hand, Fig. 12 (A-3) illustrates the curve illustrated in Fig. 12(A-1) and the curve restored using the sequence of the control points P₁' to P₄' illustrated in Fig. 12(A-2), and Fig. 12(B-3) illustrates the curve illustrated in Fig. 12(B-1) and the curve restored using the sequence of the control points P₁' to P₄' illustrated in Fig. 12(B-2).

As is apparent from Fig. 12, in the case of this extraction method in which one of points at both ends of an original curve is set as the starting control point P₁' and the other one of the points is set as the terminal control point P₄', even if the original curve is not smooth, it is possible to extract the intermediate control points P₂' and P₃' with which a curve that is substantially the same as the original curve can be restored.

As is apparent from results of the experiments, the identification data indicates using the content certification identifier stored in the header region HAr (Fig. 10) that the sequence of the control points P₁ to P₄, which is stored in the data region DAr (Fig. 10) for each of the partial blood vessel lines Ci, is an element having a high degree of reproducibility of an actual blood vessel line. As a result, a data structure capable of certifying that the sequence of the control points P₁ to P₄ is highly reliable can be obtained.

### (3) Details of Authentication Process Performed by Control Section

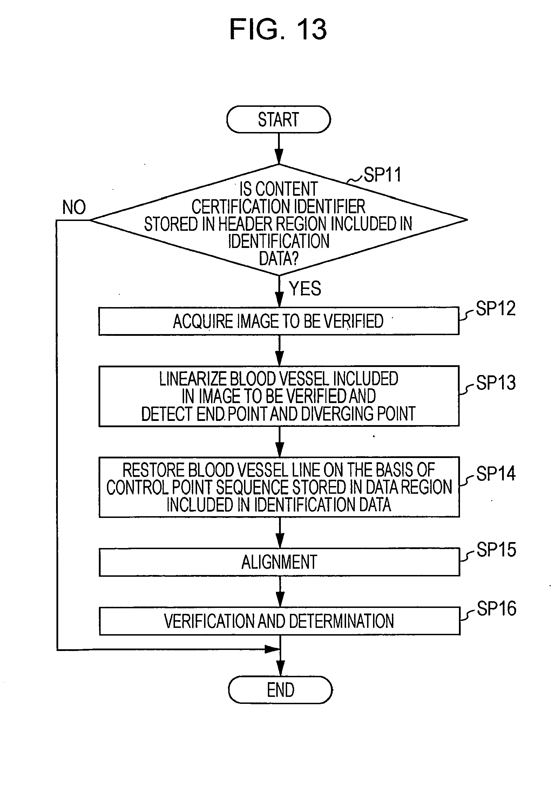

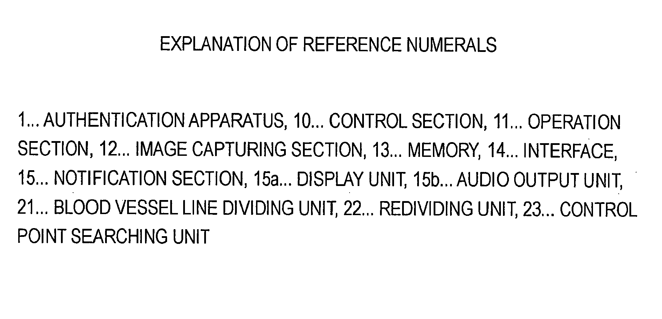

Next, the authentication process performed by the control section 10 in the authentication mode will be described in detail with reference to a flowchart illustrated in Fig. 13.

If the control section 10 receives the execution command COM2 from the operation section 11 (Fig. 1), it starts the authentication process. In step SP11, the control section 10 reads out identification data stored in the memory 13 and determines whether a content certification identifier is stored in the header region HAr (Fig. 10) of the identification data.

If the content certification identifier is not stored, this means that data stored in the data region DAr (Fig. 10) is data of an unreliable subject to be subjected to biometric identification. In this case, the control section 10 deletes the identification data read out from the memory 13 and terminates the authentication process.

On the other hand, if the content certification identifier is stored, in step SP12, the control section 10 controls the image capturing section 12 (Fig. 1) so as to acquire data of an image including blood vessels. In step SP13, the control section 10 performs predetermined preprocessing upon the image data as appropriate and detects end points and diverging points included in a blood vessel line on an image that is obtained as a result of the preprocessing.

In step SP14, the control section 10 restores each of the partial blood vessel lines Ci using the sequence of four control points P₁ to P₄ stored in the data region DAr (Fig. 10) of the identification data read out from the memory 13 in step SP11, thereby restoring an original blood vessel line.

In step SP15, the control section 10 calculates the amount of correction (the amount of movement) by rotating and moving in parallel, on the basis of the sequence of the control points P₁ to P₄ (that is, end points and diverging points) included in the restored blood vessel line, the diverging points and the end points that have been detected in step SP13 from the blood vessel line on the image to be verified, and performs an alignment between the restored blood vessel line and the blood vessel line included in the image to be verified on the basis of the amount of correction (the amount of movement). In step SP16, the control section 10 determines whether a registrant is present by comparing these aligned blood vessel lines with each other.

For example, if it is clear from a result of the comparison that the percentage of the number of overlapping pixels of the aligned blood vessel lines is equal to or larger than a predetermined threshold value, the control section 10 determines that a person can be approved as the registrant. On the contrary, if the percentage is smaller than the threshold value, the control section 10 determines that the person cannot be approved as the registrant.

Thus, if the content certification identifier is not stored in the header region HAr (Fig. 10) of the identification data, the control section 10 determines that data included in the data region DAr (Fig. 10) of the identification data is data of an unreliable subject to be subjected to biometric identification and terminates the process of restoring a blood vessel line on the basis of the data stored in the data region DAr. As a result, it is possible to prevent the comparison between a blood vessel line to be verified and a blood vessel line that is restored on the basis of stored data other than stored data that has been extracted with given extraction accuracy and to prevent the decrease in authentication accuracy.

### (4) Operation and Effect

As described previously, the control section 10 divides a blood vessel line into a plurality of partial blood vessel lines on the basis of the end points and diverging points of the blood vessel line, individually sets points at both ends of each of these partial blood vessel lines as a starting control point and a terminal control point forming a control point sequence used to generate a curve using a Bézier function, and extracts intermediate control points forming the control point sequence using the starting control point and the terminal control point.

Subsequently, the control section 10 generates identification data (Fig. 10) including the positions of the starting control point and the terminal control point (points at both ends) of each of the partial blood vessel lines and the positions of the intermediate control points for each of the partial blood vessel lines.

Accordingly, the control section 10 can express partial blood vessel lines using only points capable of restoring not only the connection relationship between the partial blood vessel lines but also the shapes of the partial blood vessel lines, that is, can discretely express a blood vessel line using these points that have a certain relationship with the blood vessel line.

As a result, the probability of determining that a person who is not a registrant is the registrant or a person who is the registrant is not the registrant by mistake due to external factors such as an image capturing environment and noise or internal factors such as (the difference between individuals in) the difficulty in capturing the image of blood vessels of living organisms can be reduced. Furthermore, memory occupancy of data to be registered can be reduced.

In this embodiment, the control section 10 generates the identification data (Fig. 10) including not only the positions of a starting control point and a terminal control point of each of partial blood vessel lines and the positions of intermediate control points for each of the partial blood vessel lines but also an identifier indicating that these intermediate control points have been extracted in the extraction process (Fig. 7) of extracting points capable of generating a curve including the maximum number of overlapping points with a partial blood vessel line using a Bézier function along with points at both ends of the partial blood vessel line as intermediate control points.

Accordingly, since the control section 10 can represent that the extracted intermediate control points are points capable of restoring a curve that is the same as or similar to an actual partial blood vessel line with certainty, it can certify that the identification data itself is highly reliable and prevent the probability of determining that a person who is not a registrant is the registrant or a person who is the registrant is not the registrant by mistake.

According to the above-described configuration, by generating identification data including the positions of a starting control point and a terminal control point (points at both ends) of each partial blood vessel line and the positions of intermediate control points for each partial blood vessel line, it is possible to reduce the probability of determining that a person who is not a registrant is the registrant or a person who is the registrant is not the registrant by mistake regardless of the presence or absence of external factors such as an image capturing environment and noise or internal factors such as (the difference between individuals in) the difficulty in capturing the image of blood vessels of living organisms. Consequently, the authentication apparatus 1 capable of improving authentication accuracy can be obtained.

### (5) Other Embodiments

In the above-described embodiment, if the number of intersection points of a partial line (partial blood vessel line) and an end-to-end connection line ST is two or more, the partial line (partial blood vessel line) is redivided into a plurality of partial lines in units of areas surrounded by the partial line and the end-to-end connection line ST in descending order of total size of two adjacent areas so that the number of intersection points of each of these redivided partial lines and the end-to-end connection line ST becomes 1 or 0 (Fig. 7). However, the partial line may be redivided into a plurality of partial lines in units of areas surrounded by the partial line and the end-to-end connection line ST so that the number of intersection points of each of these redivided partial lines and the end-to-end connection line ST becomes 0.

Furthermore, in the above-described embodiment, a control point sequence used to generate a Bézier curve is used. However, a control point sequence used to generate a curve such as a spline curve using a predetermined function such as a polynomial may be used.

In the above-described embodiment, areas in which searching for intermediate control points forming a control point sequence used to generate a Bézier curve is performed are set above the peak portion of the partial blood vessel line PBL with respect to the end-to-end connection line ST. However, if a control point sequence used to generate a curve other than a Bézier curve is used, it is necessary to set intermediate control point search areas in accordance with a function used to generate the curve.

In the above-described embodiment, the number of control points forming a control point sequence (the order of a curve) is four (fourth order), but may be another number. That is, various numbers of control points may be included in a control point sequence.

Furthermore, in the above-described embodiment, the case in which blood vessel lines included in an image are made to have the same width has been described. However, these blood vessel lines do not necessarily have the same width. Even if these blood vessel lines do not have the same width, effects similar to those obtained in the above-described embodiment can be obtained.

Still furthermore, in the above-described embodiment, the case in which the above-described feature point extraction process or the above-described authentication process is performed in accordance with a program stored in a ROM has been described. However, the present invention is not limited to the case. The above-described feature point extraction process or the above-described authentication process may be performed in accordance with a program that has been installed from a program storage medium such as a Compact Disc (CD), a Digital Versatile Disc (DVD), or a semiconductor memory or has been downloaded from a program providing server on the Internet.

Still furthermore, in the above-described embodiment, the case in which a program and the image processing unit included in the control section 10 cooperate with each other in performing the above-described feature point extraction process or the above-described authentication process has been described. However, a part of the above-described feature point extraction process or the above-described authentication process may be performed by an independent piece of hardware.

Still furthermore, in the above-described embodiment, the case in which the authentication apparatus 1 having an image capturing function, a verification function, and a registration function is used has been described. However, the present invention is not limited to the case, and apparatuses that individually have these functions or parts of these functions may be used in accordance with an application purpose.

### Industrial Applicability

The present invention is applicable to a biometrics authentication field.

## Claims

1. A registration apparatus **characterized by** comprising:
dividing means for dividing a blood vessel line included in an image into a plurality of partial lines on the basis of end points and a diverging point of the blood vessel line;
extracting means for extracting a parameter representing a shape of each of the plurality of partial lines on the basis of points at both ends of the partial line; and
generating means for generating data including the points at both ends of each of the plurality of partial lines and the parameter.

2. The registration apparatus according to Claim 1, **characterized in that**, when the number of intersection points of an end-to-end straight line connecting the points at both ends of each of the plurality of partial lines to each other and the partial line is two or more, the dividing means redivides the partial line having two or more intersection points with the end-to-end straight line into a plurality of partial lines having one or less intersection point with the end-to-end straight line.

3. The registration apparatus according to Claim 1, **characterized in that**, when the number of intersection points of the end-to-end straight line connecting the points at both ends of each of the plurality of partial lines to each other and the partial line is two or more, the dividing means redivides the partial line having two or more intersection points with the end-to-end straight line into a plurality of partial lines having one or less intersection point with the end-to-end straight line so that a partial line having one intersection point with the end-to-end straight line is preferentially obtained.

4. The registration apparatus according to Claim 1, **characterized in that**, when the number of intersection points of the end-to-end straight line connecting the points at both ends of each of the plurality of partial lines to each other and the partial line is two or more, the dividing means redivides the partial line having two or more intersection points with the end-to-end straight line into a plurality of partial lines in units of areas surrounded by the partial line and the end-to-end straight line in descending order of a total size of two adjacent areas.

5. The registration apparatus according to Claim 1, **characterized in that**,
the extracting means individually sets the points at both ends of each of the plurality of partial lines as a starting control point and a terminal control point forming a control point sequence used to generate a curve using a Bézier function and extracts intermediate control points forming the control point sequence using the starting control point and the terminal control point, and
the generating means generates data including a position of the control point sequence for each of the plurality of partial lines.

6. The registration apparatus according to Claim 1, **characterized in that**,
the extracting means individually sets the points at both ends of each of the plurality of partial lines as a starting control point and a terminal control point forming a control point sequence used to generate a curve using a predetermined function, sets search areas for intermediate control points forming the control point sequence using the starting control point and the terminal control point, and individually extracts from the search areas points capable of generating a curve having the maximum number of overlapping points with the partial line using the predetermined function along with the starting control point and the terminal control point, and
the generating means generates data including the position of the control point sequence for each of the plurality of partial lines.

7. The registration apparatus according to Claim 1, **characterized in that**,
the extracting means individually sets the points at both ends of each of the plurality of partial lines as a starting control point and a terminal control point forming a control point sequence used to generate a curve using a predetermined function and extracts intermediate control points forming the control point sequence using the starting control point and the terminal control point, and
the generating means generates data including the position of the control point sequence for each of the plurality of partial lines and an identifier indicating that the intermediate control points have been extracted through a predetermined extraction process.

8. The registration apparatus according to Claim 7, **characterized in that** the predetermined extraction process is a process of extracting points capable of generating a curve having the maximum number of overlapping points with the partial line using the predetermined function along with the points at both ends of the partial line as the intermediate control points.

9. A verification apparatus **characterized by** comprising:
storing means for storing data including points at both ends of each of a plurality of partial lines into which a blood vessel line included in an image is divided on the basis of end points and a diverging point of the blood vessel line and including a parameter representing a shape of each of the plurality of partial lines on the basis of the points at both ends of the partial line;
restoring means for restoring the blood vessel line using the points at both ends of each of the partial lines and the parameter; and
verifying means for comparing the blood vessel line restored by the restoring means with a blood vessel line set as a subject to be compared with the blood vessel line.

10. The verification apparatus according to Claim 9 **characterized in that**,
the storing means stores data including a position of a control point sequence, which is used to generate a curve using a predetermined function, for each of the plurality of partial lines into which the blood vessel line included in the image is divided on the basis of the end points and the diverging point of the blood vessel line, and
the restoring means restores the blood vessel line using the control point sequence for each of the plurality of partial lines.

11. The verification apparatus according to Claim 9, **characterized in that**, when the data does not include an identifier indicating that the parameter have been extracted through a predetermined extraction process, the restoring means stops restoring of the blood vessel line.

12. A program **characterized by** causing:
dividing means to divide a blood vessel line included in an image into a plurality of partial lines on the basis of end points and a diverging point of the blood vessel line;
extracting means to extract a parameter representing a shape of each of the plurality of partial lines on the basis of points at both ends of the partial line; and
generating means to generate data including the points at both ends of each of the plurality of partial lines and the parameter.

13. A data structure of identification data generated as data to be registered **characterized in that**,
the identification data has a structure including points at both ends of each of a plurality of partial lines into which a blood vessel line included in an image is divided on the basis of end points and a diverging point of the blood vessel line and including a parameter representing a shape of each of the plurality of partial lines on the basis of the points at both ends of the partial line, and
the points at both ends of each of the plurality of partial lines and the parameter are used for processing for determining whether a person is a registrant on the basis of a degree of similarity.

14. The data structure according to Claim 13, **characterized in that**,
the points at both ends of each of the plurality of partial lines and the parameter are used for processing for restoring the blood vessel line, and
the restored blood vessel line is used for processing for determining whether a person is a registrant on the basis of a degree of similarity between the blood vessel line and a blood vessel line set as a subject to be compared with the blood vessel line.

15. The data structure according to Claim 13, **characterized in that**,
the identification data has a structure including a position of a control point sequence, which is used to generate a curve using a predetermined function, for each of the plurality of partial lines into which the blood vessel line included in the image is divided on the basis of the end points and the diverging point of the blood vessel line and including an identifier indicating that intermediate control points included in the control point sequence have been extracted through a predetermined extraction process, and
the predetermined extraction process is a process of extracting points capable of generating a curve having the maximum number of overlapping points with the partial line using the predetermined function along with the points at both ends of the partial line.
